# EUROPEAN PATENT APPLICATION

(11) **EP 4 548 765 A1**
(43) Date of publication of application: **07.05.2025**
(21) Application number: 24202483.4
(22) Date of filing: 25.09.2024
(51) Int. Cl.: A21D 2/02, A21D 2/16, A21D 2/18, A21D 2/26, A21D 2/32, A21D 8/04, A21D 10/00

(54) **WATER BASED LIQUID BREAD IMPROVER AND METHOD FOR PROVIDING THEREOF**

(30) Priority: 03.11.2023 NL 2036181
(71) Applicant: Sonneveld Group B.V., 3356 LJ Papendrecht (NL)
(72) Inventor: Oostendorp, Alexander, 3356LJ PAPENDRECHT (NL); Vugs, Herald H.C.F., 3356 LJ PAPENDRECHT (NL); Broeders, Danny, 3356 LJ PAPENDRECHT (NL); Weegels, Peter Louis, 3356 LJ PAPENDRECHT (NL); Branco, Pedro, 3356 LJ PAPENDRECHT (NL)
(74) Representative: Arnold & Siedsma

(57) **Abstract**

The present invention relates to a water based liquid bread improver. More specifically, the present invention relates to a water based liquid bread improver which is suitable for preparing bakery foods. According to a further aspect, the present invention relates to a method for providing a water liquid bread improver suitable for preparing bakery foods. According to yet a further aspect the present invention relates to a method for providing a bakery food product.

## Description

The present invention relates to a water based liquid bread improver. More specifically, the present invention relates to a water based liquid bread improver which is suitable for preparing bakery foods. According to a further aspect, the present invention relates to a method for providing a water liquid bread improver suitable for preparing bakery foods. According to yet a further aspect the present invention relates to a method for providing a bakery food product.

Bread improvers, also known as dough conditioners or bread enhancers, are additives used in bread production to improve the quality and performance of the dough. They serve several functions and help overcome some of the challenges encountered during bread-making or other bakery products. Bread improvers are used to enhance the product quality and to improve or facilitate the production process, including enhancing dough strength, improve dough tolerance in view of processing or handling conditions, optimizing crumb texture and softness, dough consistency and storage (shelf life). Bread improvers contain ingredients such as enzymes, antioxidants, proteins and emulsifiers and may have different physical forms like powders, blocks or liquids.

Liquid bread improvers are advantageous since they can be dosed automatically, quick and very accurately which is useful in for example industrial scale bakeries. Two different types of liquid bread improvers are available: water- or oil-based liquid bread improvers. Conventionally, liquid bread improvers are based on vegetable oil components. The oil-based type liquid bread improved may contain enzymes and fat-based emulsifiers, this in contrast to the water based liquid bread improver in which the fat based emulsifier, when mixed with the other components of a liquid bread improved, will not provide a homogenous physically stabilized mixture that is suitable for bread-making or other bakery products. A water-based composition is cheap compared with the oil-based composition but cannot contain emulsifiers that enhance crumb structure, freshness or slice-ability of the bread.

Although providing a more complete product as liquid bread improver comprised of fat-based emulsifiers, the vegetable oil used in these liquid bread improvers makes the product expensive and is expected to become more expensive in the future. Additionally, vegetable oil production has a negative environmental impact. Further, the physical structure of an oil-based bread improver is made of a network of fat crystals which makes it vulnerable to break at high temperatures. The use of oil for bread improvers also has a drawback in view of the production process since it requires substantial energy for heating up the oil and subsequent cooling for forming the fat crystal network.

Given the above drawbacks of oil-based bread improvers, there is an increased interest in water-based bread improvers that can provide similar results as their oil-based counterpart. There have been studies in the past for liquid bread improvers in which no fat component is present. However, a good working liquid bread improver that could replace oil-based bread improvers is not available at the moment. The baking performance of water-based liquid bread improvers, for example baking time, are not sufficient for industrial scale bakery. The long-term storage and shelf life of water based liquid bread improvers in which no fat is present is also generally poor, i.e. a few days in general. After which the enzyme activity of the bread improved drops significantly and due to the absence of the emulsifier the physical stability of the liquid bread improved also greatly reduced over time. Finally, the handling of bread improvers is important for consistent, regular and automated use in present controlled bakery processes, wherein the bread improver needs to be of a viscosity that allows the bread improver to be pumped and mixed efficiently.

Considering the above, there is a need in the art for a liquid bread improver which can be used instead of conventional oil-based bread improvers. Such a liquid bread improver is not oil-based, is less expensive than an oil-based type and has similar or even improved product properties in view of its use in production process, enhancing dough strength, improve dough tolerance in view of processing or handling conditions, optimizing crumb texture and softness, dough consistency and storage (shelf life).

It is an object of the present invention, amongst other objects, to address the above need in the art. The object of present invention, amongst other objects, is met by the present invention as outlined in the appended claims.
Specifically, the above object, amongst other objects, is met, according to a first aspect, by the present invention by a liquid bread improver suitable for preparing bakery foods, wherein said liquid bread improver is water-based and comprised of proteins of vegetable origin, 1 to 30 wt.% of lipophilic emulsifier, 12 to 30 wt.% of salt, enzymes, and optionally sugar, wherein the liquid bread improver has a water activity of lower than 0.9, preferably lower than 0.8, more preferably lower than 0.77.

The water based liquid bread improver of present invention preferably comprises a saturated salt solution, i.e. the maximum possible amount of salt in solution without precipitation of said salt, which enables the mixing of the fat based emulsifier thereby providing a liquid bread improver of the present. The liquid bread improver of the present invention makes it possible for the fat-based emulsifiers to stay active in a water-based bread improver without losing baking performance. The liquid bread improver of the present invention is a water-based composition which has improved baking performance than current water-based compositions and has the same functionality and performance as a composition based on vegetable oil. But without the need to use vegetable oil as carrier. 5 wt% of lipophilic emulsifier present in the liquid bread improver already improves the bread and thickens the composition. More than 30 wt.% lipophilic emulsifier present in the liquid bread improver results in a viscosity of above 400 mPa·s, which is undesirable in view of handling, pumpability and dosing. The wt% as used herein means weight percentage of the indicated component as the total weight of the liquid bread improver.

Bakers now have the possibility to use a water based liquid bread improver that is less expensive (not affected by the volatile vegetable oil market) compared to the oil-based type. It contains all the functional ingredients including fat-based emulsifiers so no on top improvers are necessary for it to function optimal, is easy to dose and has a low carbon footprint. The present invention provides a liquid bread improver which has substantially no oil components, preferably less than 1wt%, more preferably less than 0.5 wt%, even more preferably less than 0.1 wt% of oil components.

Lipophilic emulsifiers, also known as fat-based emulsifiers, are substances that help stabilize emulsions by interacting with the fat or lipid components. These emulsifiers are soluble in fats and oils, allowing them to disperse in the lipid phase of the emulsion and form a stable interface between the oil and water phases. Lipophilic emulsifiers such as lecithin and mono/diglycerides have a lipophilic portion that interacts with the fat phase and a hydrophilic portion that interacts with the water phase, helping to create stable emulsions. These emulsifiers play a crucial role in creating stable emulsions by reducing the interfacial tension between immiscible phases and preventing them from separating over time.

Preferably the present liquid bread improver has a water activity of lower than 0.9, such as lower than 0.85 or lower than 0.8. More preferably the water activity is in the range of 0.7 to 0.85, more preferably in the range of 0.75 to 0.77. An advantage of the present water activity is that the liquid bread improver is microbial stable for longer periods of time.

Further, the present inventors surprisingly found that the present liquid bread improver is suitable for preparing bakery foods of a quality as good or even better as with oil-based liquid bread improvers. Further, the baking performance of the present liquid bread improver is excellent in terms of handling and labour required. The liquid bread improver is stable over longer periods of time. Specifically, liquid bread improvers according to the present invention remain physical stable for periods of more than 4 months while the enzymes present remain their activity. This is of utmost importance for the liquid bread improver in order it can be used for preparing bakery foods. In addition, it was found that the medium of the liquid bread improver could stabilise micro-organisms (yeast, lactic acid and other sour dough bacteria) during this shelf life.

According to a preferred embodiment, the present liquid bread improver comprises:
(i) 15 to 25 wt.%, preferably 17.5 to 22 wt.% salt;
(ii) 5 to 35 wt.%, preferably 7.5 to 30 wt.%, more preferably 10 to 25 wt.% of proteins of vegetable origin;
(iii) 0 to 35 wt.%, preferably 5 to 25 wt.%, more preferably 10 to 20 wt.% of sugar;
(iv) 5 to 25 wt.%, preferably 10 to 20 wt.% of a lipophilic emulsifier;
(v) 0.01 to 7.5 wt.%, preferably 0.5 to 5 wt.% enzymes; and
(vi) water up to 100 wt.%.

Liquid bread improvers according to the above recipe can conveniently be used for baking of several kinds of bread such as white bread, brown bread, soft rolls, etc, wherein the handling of the present bread improver is excellent, and the liquid bread improver can be stored for at least several months. The present liquid bread improver can be adjusted for specific types of bread by adjusting the bread improvement agent. For example, the 5 to 35 wt% of proteins of vegetable origin may include 5 wt% of gluten of vegetable origin, and/or may include 30 wt% of wheat flour (which also contain gluten), depending on the type of bakery product in which the liquid bread improver of present invention is used. Further, the present liquid bread improver enables a high uptake of powder, such as sugar, protein, various flour types, enzymes, micro-organisms, bread improvement agent, while the liquid bread improver remains a homogenous liquid, having a viscosity which allows the liquid bread improver to be pumped and dosed automatically.

The liquid bread improver comprises salt as preservative, preferably, the water is saturated by approximating 26 wt.% salt based on the weight of the water. The total amount of salt within the composition of the liquid bread improver therefore dependents on the total weight of water. The right consistency is achieved by addition of proteins of vegetable origin. As they take up water they swell and thicken the liquid bread improver. However, more than 35 wt.% of proteins results in a viscosity of above 400 mPa·s, preferably above 450 mPa·s and obstructs right pumping or dosing. Reducing the amount of protein to less than 5 wt.% results in a viscosity of less than 150 mPa·s, preferably less than 180 mPa·s, making the liquid bread improver too liquid to physically stabilize the composition.

The maximum wt.% of sugar within the composition of present invention is the maximum amount that will dissolve in water. Even when salt is present to about 25 wt.% in weight, an amount 35 wt.% of sugar can be dissolved. Sugar helps to preserve the liquid bread improver, whilst being a food source for yeast. The liquid bread improver of present invention can be made without sugar, the enable low sugar bakery products.

According to yet another preferred embodiment, the present invention relates to the liquid bread improver wherein the sugar is dextrose, wherein the dextrose is present in 5 to 25 wt. % of the liquid bread improver. Preferably, the sugar or dextrose is present in 20 to 25 wt.% of the liquid bread improver. An advantage of liquid bread improvers having dextrose (or sucrose) is that it provides food for yeast and thus helps the baking performance, and the sugar helps preserving the liquid bread improver. Dextrose (and sucrose) is a common ingredient in bakery foods.

According to another embodiment, the present invention relates to the liquid bread improver wherein the proteins of vegetable origin selected from the group consisting of wheat, soy, peas barley, rye and beans.

According to yet an embodiment, the present invention relates to the liquid bread improver, wherein the proteins of vegetable origin are at least gluten, wherein the gluten are present in 5 to 25 wt%, preferably 7.5 to 20 wt%, more preferably 10 to 15 wt% of the liquid bread improver. An advantage of using gluten as vegetable proteins is that gluten conveniently can be used in a liquid bread improver since gluten is also present in dough (or flour used). Surprisingly, the inventors found that present liquid bread improver comprising gluten remains at a viscosity which allows the bread improver to be pumped. Thus, although gluten together with water are used, the gluten did not form a rubber like pasty texture.

According to a preferred embodiment, the present salt is a sodium salt, calcium salt, potassium salt, ammonium salt or combinations thereof, preferably sodium salt. More preferably the present salt is sodium chloride, potassium chloride, ammonium chloride or combinations thereof. The addition of salt to the present liquid bread improver is essential for obtaining the stabile and homogenous mixture including the emulsifiers and advantageous since it may adjust the water activity to a desired level in order to minimize microbial growth.

According to another embodiment, the present invention relates to the liquid bread improver wherein the lipophilic emulsifier is one or more selected from the group consisting of Lecithin, Monoglycerides and Diglycerides, Calcium Stearoyl Lactylate (CSL), Sodium Stearoyl Lactylate (SSL), Diacetyl tartaric acid esters of mono- and diglycerides (DATEM), Sorbitan Esters, such as Sorbitan Monostearate, Sorbitan Monooleate, and Polysorbates, preferably CLS, DATEM or lecithin. Inclusion of emulsifiers provide the stabile and homogenous mixture to the liquid bread improver of present invention. Emulsifiers CLS, DATEM or lecithin may be preferred in view of the properties of the resulting bakery product in with the liquid bread improver is used, providing improved texture, softness and crumb structure to the resulting bread.

According to yet another preferred embodiment, the present invention relates to the liquid bread improver wherein the enzymes are chosen from the group consisting of amylase, glucose oxidases, lipase, protease, hemicellulose, trans glutaminase and combinations thereof. Preferably, the present enzymes are dissolved in the present liquid bread improver.

According to a preferred embodiment, the present invention relates to the liquid bread improver further comprising 1 to 10 wt% a bread improvement agents selected from the group consisting of wheat flour, soy flour, malt extracts, malt flour, yeast, sodium ascorbate, ascorbic acid, locust bean gum, carboxymethylcellulose, gelatine guar gum, xanthan gum or combinations thereof. For example, the bread improvement agent is a bread improvement agent suitable for the preparation of white bread, wholemeal bread or other bakery products. More preferably, the present bread improvement agent comprises soy flour, malt extracts, malt flour, yeast. Further, the bread improvement agent may also comprise bean flour, locust bean gum, carboxymethylcellulose, gelatine guar gum, xanthan gum or combinations thereof. A bread improvement agent may provide taste, colour and aroma's to the bread to be baked. The composition of the bread improve agent may be adapted to the type of bread to be baked, since each type of bread has its own characteristics.

According to another preferred embodiment, the present invention relates to the liquid bread improver wherein the liquid bread improver has a viscosity from 150 to 450 mPa·s, preferably 180 to 400 mPa·s, more preferably 200 to 350 mPa·s, at room temperature as determined by a Roto Viscometer. The present liquid bread improver has a viscosity which is less than the viscosity of oil-based liquid bread improvers depending on the type of emulsifiers used. Which permits an easier processing such as pumping. The liquid bread improver has a viscosity which allows the liquid bread improver to be easily processed by a pump or other dosing equipment.

According to yet another preferred embodiment, the present invention relates to the liquid bread improver wherein the liquid bread improved is free of preservatives, such as glycol, vinegar or propionic acid.

The present invention, according to a second aspect, relates to a method for providing a liquid bread improver suitable for preparing bakery foods, comprising the steps of:
(i) dissolving while mixing a salt in water to provide a saturated salt solution at room temperature (about 18 to 25 °C), and optionally further dissolving while mixing a sugar in said saturated salt solution;
(ii) adding to the saturated salt solution while mixing a lipophilic emulsifier, a protein, enzymes and optionally a bread improvement agent until a homogeneous mixture is obtained, and providing a water based liquid bread improver having a water activity of lower than 0.9, wherein the salt is present in 12 to 30 wt.% and the lipophilic emulsifier is present in 1 to 30 wt% of the liquid bread improver.

The present method is advantageous since the ingredients of the liquid bread improver can simply be mixed until a homogenous and stabilized mixture is obtained including the fat based lipophilic emulsifiers, without necessary heating and cooling steps to obtain a homogenous and stable mixture. Thus, the present method is effective both in production costs as in the use of natural resources. Generally, mixing for at least 5 minutes would be sufficient to provide a homogenous mixture. Preferably, dissolving salt in water comprises adding salt to the water until the saturation point is reached, so the maximum amount of salt is added without precipitation of salt. Preferably, the present method provides the water based liquid bread improver suitable for preparing bakery foods according to the present invention.

According to a preferred embodiment, the present invention relates to the method wherein a liquid bread improver as disclosed herein is provided. In a preferred embodiment the present sugar, proteins, salt, enzymes and/or bread improvement agent added to water are in powder form. However, these components can be used dissolved or dispersed in water as long as the water activity stays below 0.9.

Given the advantageous properties of the present liquid bread improver, the present invention relates according to another aspect to a method for providing a bakery food product, wherein the liquid bread improver according to the present invention is used. Preferably, the present liquid bread improver is mixed with flour and other required components to a dough, proofed and subsequently the provided mixture is baked thereby providing the bakery food product. Preferably the present bakery food product is a tin bread such as white bread or wholemeal bread or the present bakery food product is a soft roll such as white or brown soft rolls or crispy rolls.

The present invention, according to a further aspect, relates to a bakery food product comprising a liquid bread improver of present invention. Further, the present invention relates to the bakery food product such as bread obtainable by the present method. The bakery food product provided by the present method has advantageous properties such as a fine texture and slow aging.

The present invention, according to a further aspect, relates to the use of a liquid bread improver of present invention for providing a bakery food product, preferably a bread product.

The principles of the present invention will be further detailed in the figures and examples showing preferred embodiments of the present invention.

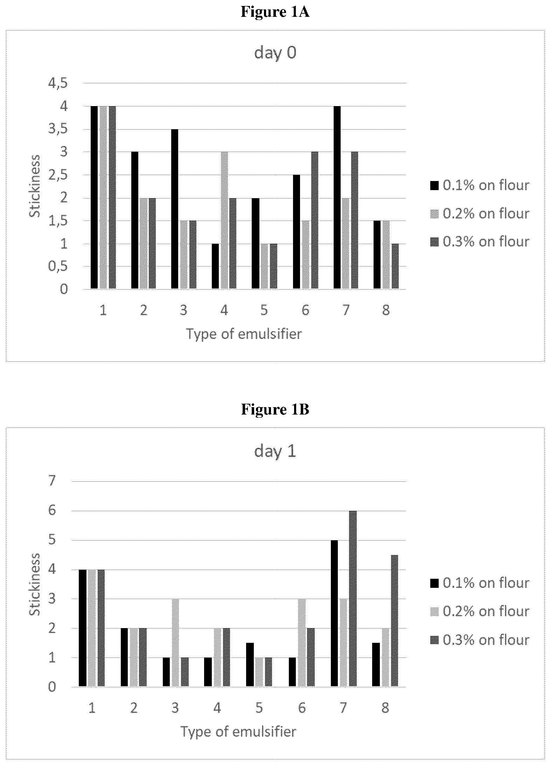

- **Figure 1:**: Shows the level of resilience (stickiness) of the bread produced by the liquid bread improver of present invention. Bread produced using the liquid bread improver preparations of example 1 comprising the emulsifiers including CSL ("2"), SSL ("3"), DATEM ("4"), lecithin ("5") and three types of monoglyceride having a particle size of 75, 150 and 350 µm ("6", "7", and "8", respectively) were included in the test. A bread produced by a reference liquid bread improver ("1") that did not comprise emulsifiers was included. For every emulsifier three liquid bread improver samples were tested; a sample with 5% emulsifier (0.1% in bread), a sample with 7,5% emulsifier (0.2% in bread) and a sample with 10% emulsifier (0.3% in bread). The more the slices of bread stick to each other the higher the given number of stickiness was scored on a scale from 1 to 7. The reference in this test is given a 4. The results show clearly that the liquid bread improvers of present invention comprising emulsifiers have a positive effect on the stickiness of the sliced bread (Figure 1A). The effect is further improved after one day after backing (Figure 1B).

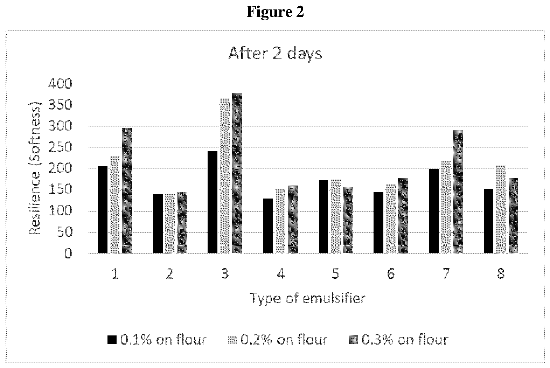

- **Figure 2:**: Shows the softness of the breads or crumb structure of figure 1. The same samples were used to investigate the effect of emulsifiers on the softness of the crumb, after 2 days after baking using a texture analyser on bread slices (5 cm). The more force (g) is needed to press the bread the less soft the crumb is. A difference of 50 points is considered significant. As can be seen most liquid bread improver compositions of present invention have a positive effect on the softness of the resulting bread.

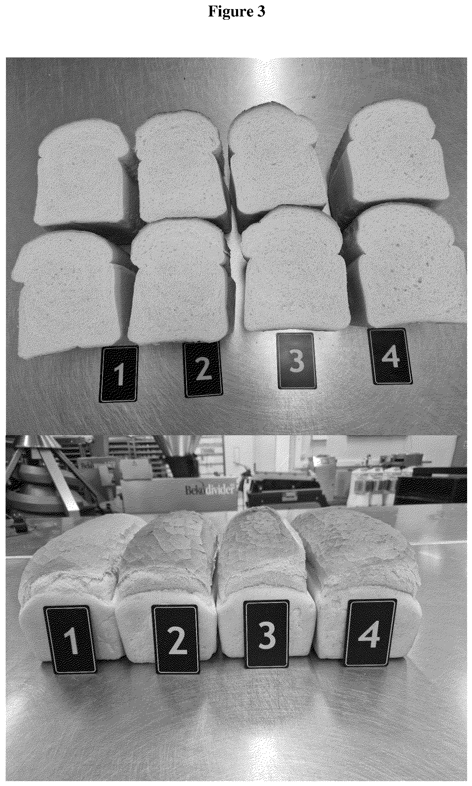

- **Figure 3:**: Shows visual conformation of the quality of the bread produced with the liquid bread improver of present invention that was stored for 4 months. After 4 months there is no decline in volume of the bread produced with the liquid bread improver of present invention. A bread produced using a "fresh" liquid bread improver was used as reference (bread 1). In addition, three other breads (bread 2, 3 and 4) were produced using the liquid bread improvers that were stored for 4 months, wherein the samples comprised 5%, 7,5% or 10% emulsifier.

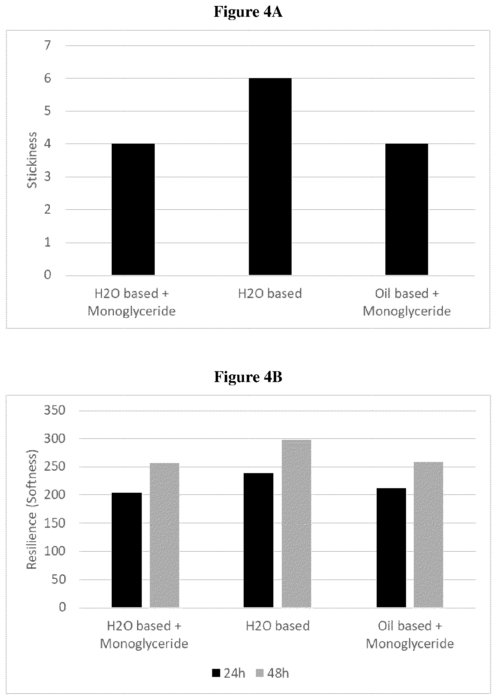

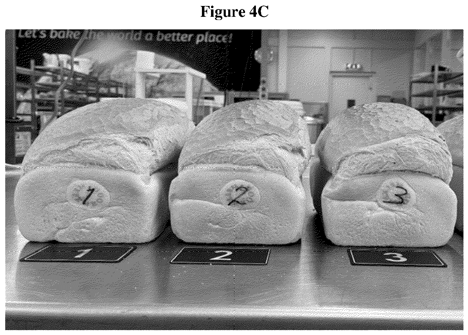

- **Figure 4:**: Shows the level of stickiness (figure 4A) and softness (figure 4B) of bread produced by the water based liquid bread improver of present invention (H2O based + Monoglyceride, Bread 1) and a common oil-based liquid bread improver (Oil based + Monoglyceride, Bread 3). As control a water based liquid bread improver free of emulsifier was included (H2O based, Bread 2). No significant difference was observed in the stickiness and softness of the different breads over 24h and 48 h after baking. The different breads have comparable taste and feel (Figure 4C).

### Example

### Example 1 - Preparation of liquid bread improver

Preparation of 5 liter of water based liquid bread improver of present invention for baking wholemeal bread, according to Table 1. Several preparations were made with different emulsifiers including CSL, SSL, DATEM, lecithin and three types of monoglyceride. The levels of emulsifier are: 5%, 7.5% and 10% and the amount of emulsifier was compensated with the amount of wheat flour, for example the preparation comprising 5 wt.% of emulsifier, comprises 16 wt.% of wheat flour, whereas the preparation comprising 10 wt.% of emulsifier comprises 11 wt% of wheat flour.

**Table 1. Ingredients liquid bread improver**

| **Ingredients** | **Wt.%** |
|---|---|
| Emulsifier | 5, 7.5 or 10 |
| Dextrose | 22.2 |
| Wheat flour | 16, 13.5 or 11 |
| Salt (NaCl) iodized | 14 |
| Amylase & hemicelluloses & lipase | 0.6 |
| Xanthan gum | 0.2 |
| Water | Up to 100 |

The salt was added to the water under stirring until a saturated salt solution is obtained at room temperature. Subsequently, the dextrose was mixed with the saturated salt solution and dissolved. Next, the gluten and emulsifiers were added under stirring, followed by adding enzymes and bread improvement ingredients under stirring. The obtained mixture was stirred for about 5 minutes to obtain a stabilized homogenous mixture. The water activity (A_{w}) of the mixture was about 0.76.

### Example 2 - Stickiness, crumb structure and softness of produced bread using Liquid bread improver

The liquid bread improver preparations of example 1 comprising the emulsifiers including CSL (references in Figure 1 as "2"), SSL ("3"), DATEM ("4"), lecithin ("5") and three types of monoglyceride ("6", "7", and "8"). One reference liquid bread improver ("1") without emulsifiers was included. For every emulsifier three liquid bread improver samples were tested according to ISO 5492; a sample with 5% emulsifier, a sample with 7,5% emulsifier and a sample with 10% emulsifier. When baking the bread, for all liquid bread improver samples a dosage of 2% on the flour weight was used. So that means that the bread produced using the liquid bread improver comprising the 5% emulsifier comprised a 0.1% emulsifier on flour weight, the bread produced using the liquid bread improver comprising the 7.5% emulsifier comprised a 0.2% emulsifier, and the final group (10% emulsifier) comprised 0.3% emulsifier on flour weight.

After baking the bread was sliced at a temperature of 35 to 37°C and packed in a plastic bag. On day 0 (same day as baking), after cooling providing a bread at room temperature, the stickiness of the bread was tested by pulling the slices of bread from each other. The more the slices of bread would stick to each other the higher the given number (on a scale from 1 to 7). The reference in this test is always given a 4. The results show clearly that the addition of emulsifiers have a positive effect on the stickiness of the sliced bread (See Figure 1A). The effect is even improved after one day (See Figure 1B).

The same samples were used to investigate the effect of emulsifiers on the softness of the crumb, see Figure 2. After 2 days the bread was sliced in 5 cm thick slices and those slices were placed under a texture analyzer (TA.XTplusC Texture Analyser, Stabile Micro Systems Products). The texture analyzer measures the force needed to press the bread. The more force (g) is needed to press the bread the less soft the crumb is. A difference of 50 points is considered significant. As can be seen in Figure 4 most emulsifiers have a positive effect on the softness of the bread.

### Example 3 - Storage of the Liquid bread improver and baking tin bread

### Storage

A liquid bread improver needs a shelf life of at least 3 months. Therefore, a shelf-life test was done. In this shelf life the volume of the bread and the crumb structure was investigated. A decline in volume or crumb structure is an indication of deteriorating baking quality. A difference of more than 3% in volume is considered significant.

After 4 months the stored liquid bread improver was analysed on its physical condition and on the activity of the enzymes. The liquid bread improver had the same physical condition after 4 months as after preparation, without being a rubber like texture or without separation of the various phases. Further, the enzyme activity was substantially the same as after preparation. Accordingly, the liquid bread improver was both physical stable and enzymatic stable.

It was observed that after 4 months there is no decline in volume of the bread produced with the liquid bread improver of present invention at all, see Figure 3 A and B. A bread produced using a "fresh" liquid bread improver was used as reference (bread 1). In addition, three other breads (bread 2, 3 and 4) were produced using the liquid bread improvers that were stored for 4 months, wherein the samples comprised 5%, 7,5% or 10% emulsifier in the recipe of the invention, as indicated in example 1 using a monoglyceride as emulsifier. No deterioration of baking performance was noticed after 4 months of storage at room temperature. Therefore, it is concluded that the liquid bread improver is stabile for at least 4 months.

### Test for baking tin bread

The liquid bread improver stored for 4 months was used for baking tin bread. The liquid bread improver was mixed with dough for 8 min (first 3 min slow, then 5 min fast) followed by rounding the dough. After a first proofing of 30 min. at 32 °C the dough was moulded and proofed for 70 min at 32 °C. Subsequently the moulded and proofed dough was baked at 235 °C for 40 min, followed by cooling and slicing.

The sliced bread was analysed on texture, volume, appearance and taste, which were not different from bread baked with conventional oil-based liquid bread improvers. Thus, the liquid bread improver allowed the above baking process to provide a wholemeal bread of good quality.

### Example 4 - Bread of Oil-based liquid bread improver vs. water-based liquid bread improver

Bread obtained via an oil-based liquid bread improver (Liquison, Sonneveld) was compared to bread obtained via the water based liquid bread improved according to the present invention, example 1. The water based liquid bread improver comprised a sample with and without 7.5% monoglyceride as emulsifier. The oil-based liquid bread improver also comprised 7.5% monoglyceride as control. As in example 2, the stickiness (figure 4A) and softness (figure 4B) of produced bread was determined. Softness was determined at 24h and 48h after backing.

Results show that there is no significant difference in the stickiness and softness of the breads being produced by the oil or water based liquid bread improvers comprising the emulsifiers. However, in the absence of an emulsifier in the water-based liquid bread improver composition, the bread is significantly stickier, but comparable in softness of the bread.

## Claims

1. A liquid bread improver suitable for preparing bakery foods, wherein said liquid bread improver is water-based and comprised of proteins of vegetable origin, 1 to 30 wt.% of lipophilic emulsifier, 12 to 30 wt.% of salt, enzymes, and optionally sugar, wherein the liquid bread improver has a water activity of lower than 0.9, preferably lower than 0.8, more preferably lower than 0.77.

2. Liquid bread improver according to claim 1, comprising:
(i) 15 to 25 wt.%, preferably 17.5 to 22 wt.% salt;
(ii) 5 to 35 wt.%, preferably 7.5 to 30 wt.%, more preferably 10 to 25 wt.% of proteins of vegetable origin;
(iii) 0 to 35 wt.%, preferably 5 to 25 wt.%, more preferably 10 to 20 wt.% of sugar;
(iv) 5 to 25 wt.%, preferably 10 to 20 wt.% of a lipophilic emulsifier;
(v) 0.01 to 7.5 wt.%, preferably 0.5 to 5 wt.% enzymes; and
(vi) water up to 100 wt.%.

3. Liquid bread improver according to claim 1 or 2, wherein the sugar is dextrose, wherein the dextrose is present in 5 to 25 wt. % of the liquid bread improver.

4. Liquid bread improver according to any one of the claims 1 to 3, wherein the proteins of vegetable origin selected from the group consisting of wheat, rye, barley, soy, peas and beans.

5. Liquid bread improver according to any oneof the claims 1 to 4, wherein the proteins of vegetable origin are at least gluten, wherein the gluten is present in 5 to 25 wt%, preferably 7.5 to 20 wt%, more preferably 10 to 15 wt% of the liquid bread improver.

6. Liquid bread improver according to any one of the claims 1 to 5, wherein the salt is a sodium salt, calcium salt, potassium salt, ammonium salt or combinations thereof, preferably sodium salt.

7. Liquid bread improver according to any one of the claims 1 to 6, wherein the enzymes are chosen from the group consisting of amylase, glucose oxidases, lipase, protease, hemicellulose, trans glutaminase and combinations thereof.

8. Liquid bread improver according to any one of the claims 1 to 7, wherein the lipophilic emulsifier is one or more selected from the group consisting of Lecithin, Monoglycerides and Diglycerides, Calcium Stearoyl Lactylate (CSL), Sodium Stearoyl Lactylate (SSL), Diacetyl tartaric acid esters of mono- and diglycerides (DATEM), Sorbitan Esters, such as Sorbitan Monostearate, Sorbitan Monooleate, and Polysorbates, preferably CLS, DATEM or lecithin.

9. Liquid bread improver according to any of the claims 1 to 8, further comprises 1 to 10 wt% a bread improvement agents selected from the group consisting of wheat flour, soy flour, malt extracts, malt flour, yeast, sodium ascorbate, ascorbic acid, locust bean gum, carboxymethylcellulose, gelatine guar gum, xanthan gum or combinations thereof.

10. Liquid bread improver according to any of the claims 1 to 9, wherein the liquid bread improver has a viscosity from 150 to 450 mPa·s, preferably 180 to 400 mPa·s, more preferably 200 to 350 mPa·s, at room temperature as determined by a Roto Viscometer.

11. Liquid bread improver according to any one of the claims 1 to 10, wherein the liquid bread improved is free of preservatives, such as glycol, vinegar or propionate.

12. Method for providing a liquid bread improver suitable for preparing bakery foods, comprising the steps of:
(i) dissolving a salt in water under mixing to provide a saturated salt solution at room temperature (about 18 to 25 °C), and optionally further dissolving while mixing a sugar in said saturated salt solution;
(ii) adding to the saturated salt solution while mixing a lipophilic emulsifier, a protein, enzymes and optionally a bread improvement agent until a homogeneous mixture is obtained, and providing a water based liquid bread improver having a water activity of lower than 0.9, wherein the salt is present in 12 to 30 wt.% and the lipophilic emulsifier is present in 1 to 30 wt% of the liquid bread improver, preferably wherein a liquid bread improver according to any one of the claims 1 to 11 is provided.

13. Method for providing a bakery food product, wherein the liquid bread improver according to any one of the claims 1 to 11 is used, preferably wherein said liquid bread improver is mixed with dough and subsequently the provided mixture is baked thereby providing the bakery food product.

14. Bakery food product comprising a liquid bread improver according to any one of the claims 1 to 11, preferably wherein said bakery food product is obtainable by a method according to claim 12 or 13.

15. Use of a liquid bread improver according to any of the claims 1 to 11 for providing a bakery food product, preferably a bread product.
